Europäisches Patentamt

European Patent Office

Office européen des brevets

(19)

(11) Publication number: **0 035 805**

**A2**

(12) # EUROPEAN PATENT APPLICATION

(21) Application number: **81200138.6**

(22) Date of filing: **05.02.81**

(51) Int. Cl.³: **A 01 D 35/20**

(30) Priority: **20.02.80 IT 4681680**

(43) Date of publication of application:
**16.09.81 Bulletin 81/37**

(84) Designated Contracting States:
**AT BE CH DE FR GB LI LU NL SE**

(71) Applicant: **Officine Meccaniche Ferrari Fernando S.p.A.**
**414, Via Valbrina**
**I-42045 Luzzara (Reggio Emilia)(IT)**

(72) Inventor: **Lodi, Mario**
**10, Via Gramsci**
**I-42045 Luzzara (Reggio Emilia)(IT)**

(74) Representative: **Corradini, Corrado**
**4, Via Sessi**
**I-42100 Reggio Emilia(IT)**

(54) Control unit for cutter bars in general.

(57) The invention concerned relates to a control unit for cutter bars in general which comprises, in cascade and/or connected together inside an oil bath casing, from the opposite ends of which there emerge a rotatable shaft for coupling to a normal power take-off and a reciprocating lever for coupling to the saw of a cutter bar, a step-up unit for the rotary inlet motion, a sliding surface device for converting the rotary motion into multi-directional reciprocating motion, and a spider for converting this latter motion into unidirectional reciprocating motion for the reciprocating lever, this latter being rigid with said spider, there being finally provided upstream of the step-up unit means for adjusting the contact between said sliding surfaces.

./...

Croydon Printing Company Ltd.

*Fig.1.*

- 1 -

CONTROL UNIT FOR CUTTER BARS IN GENERAL

The present invention relates to a unit for transmitting motion to cutter bars in general, which is of extremely simple and compact construction and has high operational reliability in that the linkages which comprise it are completely immersed in an oil bath.

The structure of cutter bars, which are fitted to a large number of agricultural machines such as mowing machines, harvesters and others, is practically universally known.

Briefly, a normal cutter bar comprises a fixed blade holding bar supported by the frame of the corresponding agricultural machine, and longitudinally housing a slidable saw driven with reciprocating rectilinear motion in the said longitudinal direction.

Various linkages of well known type, which derive their motion from a suitable power take-off of the respective associated machine are known for providing said reciprocating movement, and among these can be mentioned the reciprocating universal joint type, the type comprising a reciprocating head and universal joint, and the type comprising a reciprocating connecting rod and counterweight.

For obvious reasons, a detailed description of said known linkages will not be given, and for further information and clarification reference should be made to specialised texts, for example the small ESSO encyclopaedia of agricultural engineering.

However, although widely used for the aforesaid purposes, said linkages have drawbacks which are described briefly hereinafter.

Firstly it must be emphasised that said known linkages are excessively complicated and therefore costly, and often comprise the use of expensive and/or sophisticated mechanical members.

In addition to the aforesaid, it must be stated, as is in fact known, that these linkages operate "dry", because of which they are often subject to defective operation, considering also the heavy work to which the corresponding cutter bars are subjected, and this results in low or defective reliability.

To obviate this, numerous and frequent maintenance operations have to be carried out, both ordinary and extraordinary, with all the consequences that these bring.

It is also apparent that only in a few cases is a normal agricultural machine operator able to carry out said operations, because of which these are either neglected, with the aforesaid disadvantages, or are entrusted to specialised persons, with obvious consequences such as loss of time, loss of production and expense.

A further drawback of said known linkages is the fact that they are relatively bulky.

It should be noted that said bulk problem is strongly felt in the most developed agricultural machines of high productivity, which have to perform several functions, and which comprise other devices in addition to the linkage for driving the cutter bar. A reaping and binding machine or combine harvester are examples which demonstrate the aforesaid.

The main object of the present invention is to propose a control unit for cutter bars in general, which obviates the aforesaid drawbacks by means of a simple, functional, rational and highly reliable design which practically requires no maintenance, even after long periods of operation.

According to the invention, said object is attained by providing an oil bath casing containing all the members provided for converting the inlet rotary motion into an outlet reciprocating motion, there being provided for this purpose a rotatable shaft at the motion inlet end of the casing for connection to a normal power take-off of an agricultural machine fitted with a cutter bar, and a reciprocating lever at the motion outlet end of said casing for coupling to the saw of said cutter bar.

Said immersed members comprise, starting from the upstream end of said casing, a toothed coupling for stepping-up the inlet rotary motion, a sliding surface device for converting the rotary motion into multi-directional reciprocating motion, and a spider for converting this latter motion into unidirectional reciprocating motion which is made available to said reciprocating lever for controlling the saw of the associated cutter bar.

According to a preferred embodiment of the invention, said sliding surface device is in the form of an inclined surface disposed downstream of the toothed coupling, which is constantly contacted by a fork by way of an antifriction bearing.

The aforesaid fork is connected, by way of simple bearing members such as balls, to two arms of said spider, this latter constituting the downstream end of the reciprocating lever, and of which the two remaining arms are pivoted to the oil bath casing.

At this point, the compactness and reliability of such an invention is apparent, this being due to the choice and combination of the aforesaid techniques.

The objects and advantages of the invention, together with its operational characteristics and constructional merits, will be clearer and more apparent from the detailed description given hereinafter with reference to the figures of the accompanying drawings which show one particular preferred embodiment thereof by way of non-limiting example.

Figure 1 is a longitudinal section through the front-central part of the invention.

Figure 2 is a longitudinal section through the rear end thereof.

Figure 3 is a section on the line III-III of Figure 1.

Figure 4 is an outer side view of the invention.

Figure 5 is a plan view of the antifriction bearing with which the invention is provided.

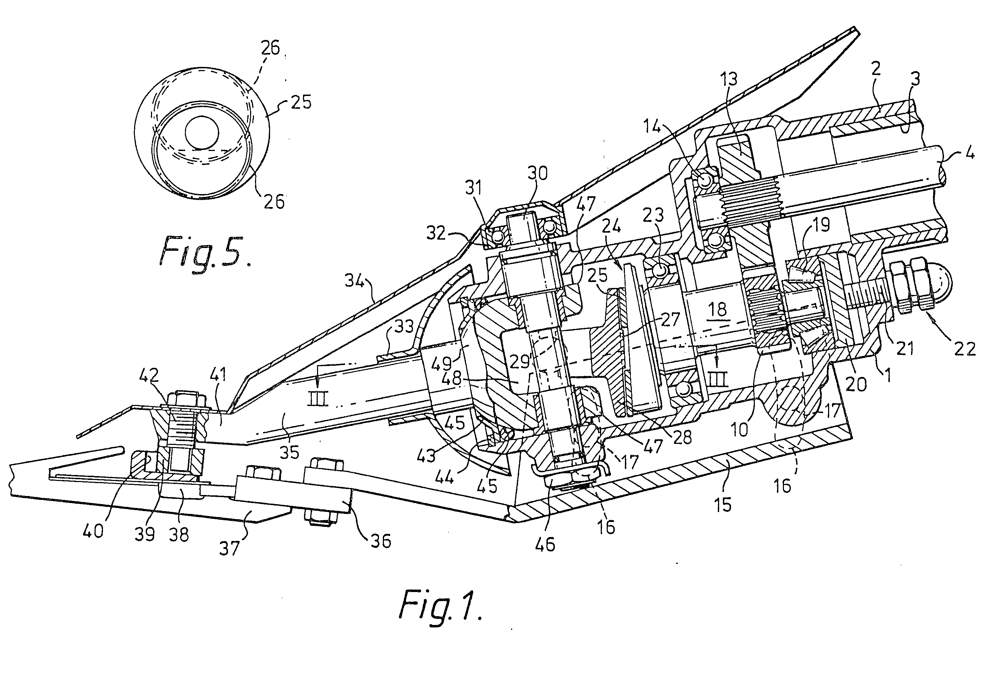

Said figures, and in particular Figure 1, show an oil bath casing 1 with different cross-sections, which is designed to be connected in known manner to the frame of the associated agricultural machine, for example a mowing machine.

Even though said associated agricultural machine has not been shown, it is apparent, as in fact is well known from the prior art, that the invention can be disposed either on the front or the rear of the said associated agricultural machine, and in either of said front or rear positions the invention can be disposed centrally or to the side according to the case in point, i.e. according to the type of said associated agricultural machine.

From the upstream end of the said oil bath casing 1, said upstream end being shown in Figure 1 on the extreme right hand of this latter figure, there branches a sheath 2 in which a tube 3 is inserted.

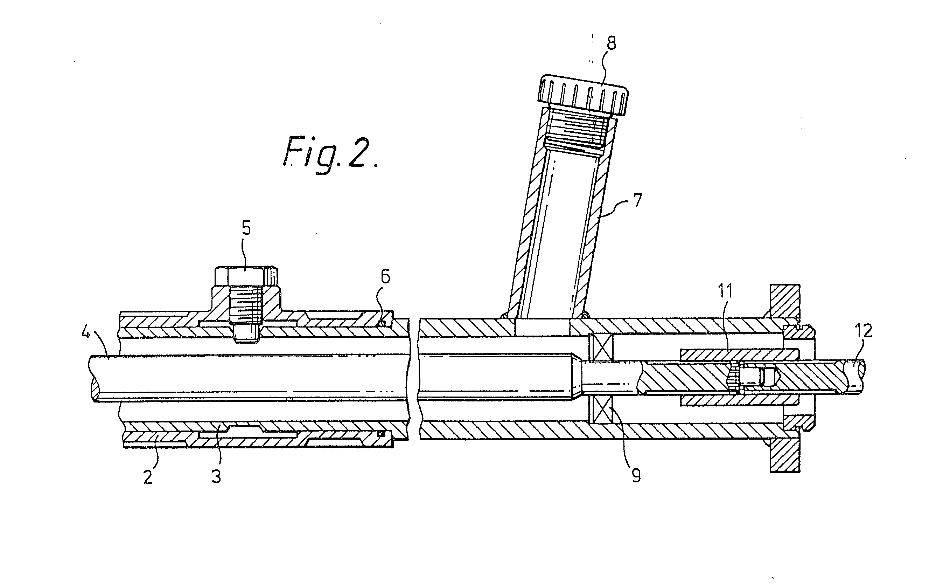

Referring in particular to the accompanying Figure 2, it can be seen that the said tube 3 is connected to the sheath 2 by means of a locking screw 5 screwed into a projecting pad which originates from the upper generating lines of the sheath 2.

At its free end, said locking screw 5 is provided with a cylindrical stem which is inserted into a corresponding bore in the tube 3 in order to lock this latter to the sheath 2. A seal ring 6 is disposed between said members 2 and 3.

The tube 3 extends for a certain length beyond the outer mouth of the sheath 2 in order to receive, in a position corresponding with its upper generating lines, a topping-up spout 7 which is fitted upperly with a threaded plug 8. Obviously, as in fact is clearly shown, the topping-up spout 7 communicates with the inner chamber of the tube 3.

A drive shaft 4 is inserted coaxially into this latter, and is provided at its upstream end with a longitudinal spline with which there engages a bush 11 provided internally with a convenient spline.

The bush 11 is only partly mounted on the splined end of the drive shaft 4 so that it can receive at its upstream end the end of a power take-off 12 which, although not shown, obviously originates from an agricultural machine which comprises a cutter bar and is fitted with the present invention.

Moreover, from said Figure 2 it can be seen that the drive shaft 4 is provided with a sealed bearing 9 disposed immediately upstream of the connection between the topping-up spout 7 and the sheath 3.

Returning again to the accompanying Figure 1, it can be seen that the downstream end of the drive shaft 4 is provided with a longitudinal spline for torsionally engaging a gear wheel 13. The end part of said spline is supported by a rolling bearing 14 housed in the oil bath casing 1 together with the said gear wheel 13. This latter engages with toothing 10 provided on an intermediate shaft 18. More precisely, the toothing 10 is provided on the upstream terminal part of the intermediate shaft 18 which is disposed parallel to the drive shaft 4 and is superposed by this latter.

The right hand end of the intermediate shaft 18 comprises a cylindrical stem on which the inner ring of a thrust bearing 19 is mounted.

The outer ring of this latter is inserted in a convenient seat in the oil bath casing 1 and is constantly contacted, on its upstream transverse surface, by a disc 20 which is close to the base of the said seat. The base wall of this latter is traversed by a threaded adjustment pin 21 which is constantly in contact with the rear face of the disc 20, and is provided externally to the oil bath casing 1 with a nut-locking nut unit 22 for adjustment and locking purposes.

Downstream of the said toothing 10, the intermediate shaft 18 is provided with an enlargement which is mounted rotatable relative to the oil bath casing 1 by way of a rolling bearing 23. Immediately downstream of the rolling bearing 23, the intermediate shaft 18 is provided with a plate, of which the downstream transverse face is constituted by a surface 24 inclined suitably to the longitudinal axis of the intermediate shaft 18.

An antifriction bearing 25 is in continuous contact with the inclined surface 24, and is provided centrally with a through bore for receiving a projection 27 of discoidal shape, which branches from the rear face of the crosspiece of a fork 28.

It is apparent, as in fact is clearly shown in the accompanying Figure 1, that the depth of the projection 27 is at least slightly less than the thickness of the antifriction bearing 25. As can be better seen in the accompanying Figure 5, this latter is provided on each sliding surface with a lubrication groove 26 which in plan view has a circular configuration and in cross-section has a semicircular configuration.

Said figure also shows that said two lubrication grooves 26 are off-centre relative to the centre line of the antifriction bearing 25, so that they open, with at least part of their extension, at the cylindrical surface of the antifriction bearing 25.

Moreover, from said Figure 5 it will be seen that the eccentricity of the two lubrication grooves 26 is in opposite directions relative to a given diameter of the plan projection of the antifriction bearing 25.

As can be seen from Figure 1, in that downstream part of the oil bath casing 1 associated with said fork 28, there is provided a spider 49 which constitutes the upstream end of
a reciprocating lever 35 for driving the saw of a normal
cutter bar.

As can be clearly seen, said spider consists of one pair of
arms 48 and a second pair of arms 47, the alignment of which
is orthogonal to the alignment of the said arms 48.

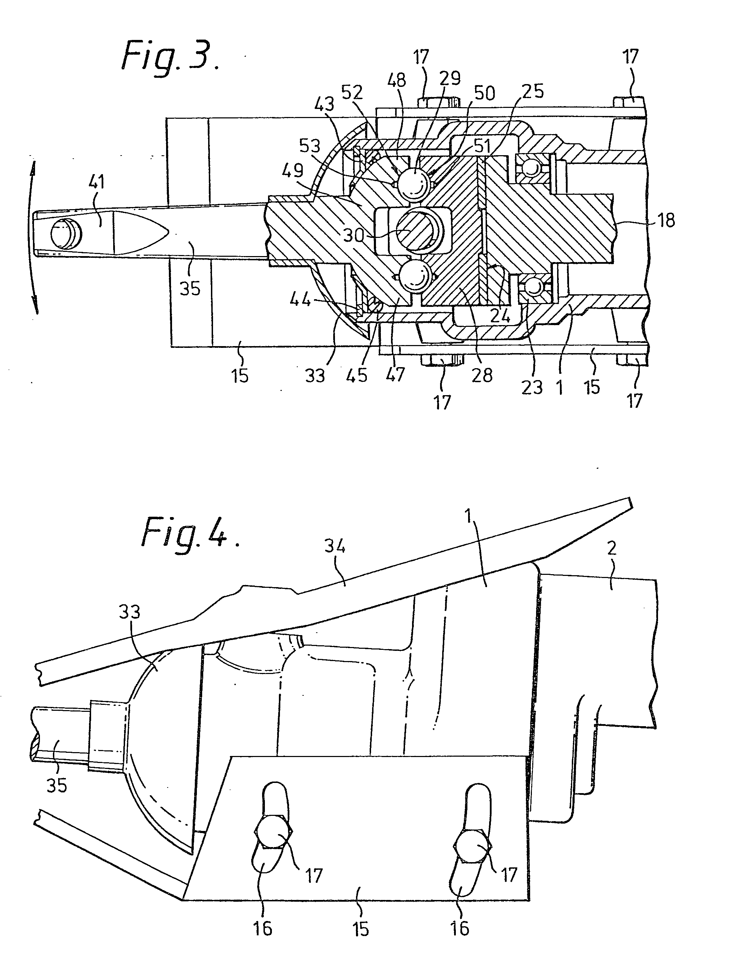

As can be seen in Figure 3, each of these latter is provided
on its transverse face with a spherical cap seat 52, in the
bottom of which a small cylindrical lubrication recess 53 is
provided.

Again from Figure 3 it can be likewise seen that on the
transverse face of each arm of the fork 28 there is provided
a spherical cap seat 50, in the base of which there is
provided a small cylindrical lubrication recess 51.

Two balls 29 are partly housed in said spherical cap seats 50
and 52, and are clearly visible in the accompanying Figure 3.

As can be seen in Figure 1, the remaining arms 47 of the
spider 49 are each provided with a through bore, and these
latter two are aligned with each other.

A pin 30 is inserted into the said through bores by way of
two convenient sliding bearings or bushes, and emerges from
the oil bath casing 1 with both its ends.

At its lower end, said pin 30 comprises a thread on which a
locking nut 46 is threaded.

In addition, two suitable seal gaskets are provided between the
end parts of the pin 30 and the oil bath casing 1.

On the upper end of said pin 30 is disposed a rolling bearing 31, on the outer ring of which there is mounted a protection cover 32 which is connected to a housing 34.

The downstream end part of the spider 49, i.e. that part disposed at the outlet mouth for the motion from the oil bath casing 1 is configured externally as a spherical cap.

Between this latter and the corresponding inner cylindrical surface of the oil bath casing 1 there is provided a lip gasket 45, which is retained in its correct operating position by a collar 43 which rests against an internal Seeger ring 44.

A protection cap 33, the mouth of which completely encloses the downstream end of the oil bath casing 1, is mounted on that portion of the reciprocating lever 35 which connects this latter to the spider 49.

As can be seen from Figures 1, 3 and 4 taken together, four projecting pads are provided on the sides of the oil bath casing 1, two on each side of said casing, in which four screws 17 are screwed for clamping and adjusting a screw 15 which surrounds the casing 1 laterally and lowerly.

Said adjustment is allowed by the presence of the arcuate slots 16 in the lateral members of the shoe 15.

A ledge branches from the front edge of the shoe 15, and on to its front end there is fixed an intermediate plate 36. This latter acts as a connection member for a normal blade holding bar 37, on the top of which a likewise normal saw 38 is slidably disposed, said saw 38 and blade holding bar 37 constituting the normal components of a usual cutter bar.

At this point it must be clarified that said shoe 15 can be single in those cases in which the control unit according to the invention is disposed centrally to the longitudinal extension of the cutter bar.

However, in those cases in which the shoe 15 is disposed to one end of the cutter bar, a further shoe is provided in known manner at the opposite end of the cutter bar.

As is clearly visible from the accompanying Figure 1, the reciprocating lever 35 extends towards the cutter bar, where it is provided with a nose 41 arranged, as stated heretofore, to lie either above the central zone or above that end of the saw 38 of the cutter bar designed to be operated by the invention.

An upwardly facing recess 40 is provided on the upper surface of the saw 38 in a position corresponding with said nose 41, and is open towards the rear edge of the saw 38. Relative to the corresponding dimensions of said saw 38, the length of the recess 40 is practically equal to the outer diameter of an idle roller 39, whereas its length exceeds said diameter.

Obviously, this greater transverse extension of the recess 40 relative to the diameter of the idle roller 39 has been provided in order to take up the movements due to the traversing of circumferential arcs by the front generating lines of the idle roller 39 during the operation of the reciprocating lever 35.

A threaded pin 42 is screwed and locked into the nose 41, and has its lower end in the form of a cylindrical stem which is inserted into a through bore provided in the idle roller 39.

Obviously, as is in fact clearly shown in said Figure 1, the longitudinal extension of said cylindrical stem is slightly less than the corresponding dimension of the idle roller 39.

The front end of the housing 34 is hinged to the nose 41 of the reciprocating lever 35 by said threaded pin 42.

The longitudinal extension of the housing 34 is practically equal to the longitudinal extension of the oil bath casing 1, except for a part of the sheath 2, whereas its transverse development practically completely covers the plan projection of the oil bath casing 1.

By virtue of the detailed description given heretofore, the operation of the invention is now apparent.

In this respect, the inlet motion provided by the drive shaft 4, which is driven by the power take-off 12 by way of the bush 11, is transmitted to the gear wheel 13 and is stepped up through the toothing 10 as the average diameter of this latter is less than the average diameter of said gear wheel 13.

The rotation of the intermediate shaft 18 also results in the rotation of the inclined surface 24 which in one complete turn generates a double conical surface with very wide vertices. The same takes place for the rear face of the cross member of the fork 28, which is driven with a complex motion, of which the reciprocating component about the line joining the centres of the pair of balls 29 is taken up by said interposed balls 29 by means of sliding.

The remaining reciprocating component of said complex motion is transmitted to the spider 49, and then to the reciprocating lever 35, which is thus compelled to reciprocate in a plane orthogonal to the axis of the pin 30, this latter constituting the pivot for the reciprocating lever 35 on the oil bath casing 1 of the invention.

In this manner, the nose 41 of the reciprocating lever 35 is driven with reciprocating motion in a plane parallel to that in which the saw 38 lies, and which is thus subjected to rectilinear reciprocating motion.

The housing 34 is also entrained by said nose 41, and can reciprocate relative to the pin 30 by way of the rolling bearing 31.

It is apparent at this point that, if necessary and/or desirable, the to-and-fro sliding speed of the saw 38 can be varied by suitably varying the transmission ratio between the gear wheel 13 and the toothing 10.

Furthermore, the extension of said to-and-fro strokes can also be varied by suitably sizing the length of the reciprocating lever 35 and the inclination of the inclined surface 24 relative to the longitudinal axis of the intermediate shaft 18.

Furthermore, according to requirements, the inclination of the shoe 15 and thus of the cutter bar can be adjusted by the screws 17, which when loosened enable the arcuate slots 16 to be set.

Furthermore, if there is any slack between the spider 49 and fork 28, and between this latter and the intermediate shaft 18, said slack can be taken up by suitably adjusting the threaded adjustment pin 21 which correctly positions the backing disc 20 for the thrust bearing 19.

From the description given heretofore, it will be apparent that an oil bath is always present inside the casing 1 due to the provision of the aforesaid seal means, and in which all the members, elements, linkages and devices of the invention are immersed.

The correct oil level inside the oil bath casing 1 can always be made up by the advantageous presence of the topping-up spout 7. The present invention, as heretofore described and constituted, is extremely compact and has high reliability because of said oil bath in which all the moving members are immersed.

Finally, at first sight it could seem that a weak point of the invention is the sliding connection points between the fork 28 and the inclined surface 24. This supposed weak point has in fact no reason to exist, because as stated heretofore with reference to the accompanying Figure 5, the invention advantageously comprises the two circular lubrication grooves 26, designed to continuously distribute a film of oil both over the inclined surface 24 and over the operating face of the cross member of the fork 28.

For the aforesaid reasons, the small cylindrical recesses 51 and 53 are provided for the spherical cap seats 50 and 52.

The invention is not limited to the single embodiment heretofore described, and modifications and improvements can be made thereto without leaving the scope of the inventive idea, the fundamental characteristics of which are summarised in the following claims.

0035805

PATENT CLAIMS

1. A control unit for cutter bars in general, as heretofore described, characterised by comprising, in cascade and/or connected together inside an oil bath casing, from the opposite ends of which there emerge a rotatable shaft for coupling to a normal power take-off and a reciprocating lever for coupling to the saw of a cutter bar, a step-up unit for the rotary inlet motion, a sliding surface device for converting the rotary motion into multi-directional reciprocating motion, and a spider for converting this latter motion into unidirectional reciprocating motion for the reciprocating lever, this latter being rigid with said spider, there being finally provided upstream of the step-up unit means for adjusting the contact between said sliding surfaces.

2. A control unit as claimed in claim 1, characterised in that said oil bath casing is in the form of an elongated metal container of different cross-sections, from the motion inlet end there branching a sleeve in which a tube is inserted and locked, from the upper generating lines of this latter there branching a spout for topping up the oil, this spout being provided with a suitable threaded closure plug; coaxially to the tube there being disposed a drive shaft on which a bush with an inner spline for coupling to said power take-off is mounted at its outer end, and a sealed bearing is mounted immediately upstream of said spout.

3. A unit as claimed in claim 1, characterised in that said step-up unit is essentially constituted by a gear wheel keyed on to the inner end of said drive shaft, and engaging with toothing provided on an intermediate shaft, this latter being rotatably mounted in the casing.

4. A unit as claimed in claim 1, characterised in that said sliding surface device is in the form of an inclined surface

- 15 -

**0035805**

provided at the downstream end of said intermediate shaft, and constantly in contact by way of an antifriction bearing with the rear face of the cross member of a fork, of which the transverse faces of its arms are provided with two spherical cap seats for partly housing a pair of balls; these latter being also partly housed in two further spherical cap seats provided on the transverse faces of a pair of arms of said spider.

5. A unit as claimed in claims 1 and 4, characterised in that said antifriction bearing is in the form of a ring mounted on a small projection branching from the rear face of the cross member of said fork, and having a depth less than the thickness of the antifriction bearing, on each transverse surface of which there is provided a groove of circular extension which is disposed eccentrically to the longitudinal axis of the bearing in order to open by way of a small portion on to the cylindrical surface of the ring.

6. A unit as claimed in claim 1, characterised in that the said spider is in the form of a hemispherical head constituting the upstream end of said reciprocating lever and housed in a sealed manner in the downstream end of the oil bath casing, orthogonally to its upstream end there being provided the two arms for partly housing said two balls, and two further arms aligned orthogonally to the alignment of said two first arms and pivoted on a pin disposed transversely to the oil bath casing and locked to this latter.

7. A unit as claimed in claim 1, characterised in that the side and lower zones of the oil bath casing are enclosed by a metal shoe, the inclination of which can be adjusted relative to said casing, and of which the front end comprises a ledge for supporting a normal blade holding bar on which a likewise normal saw is slidably disposed.

8. A unit as claimed in claim 1, characterised in that a threaded pin is screwed on to the front or downstream end of said reciprocating lever, and extends below the lever in order to receive an idle roller which is housed in a recess provided above the saw of the bar, and of which the dimension in the longitudinal direction of the saw is practically equal to the outer diameter of the idle roller, and the dimension in the direction transverse to the saw exceeds said outer diameter, in order thus to take up the movements of the roller deriving from its reciprocations along circular arcs.

9. A unit as claimed in claim 1, characterised in that said means for adjusting the contact between the sliding surfaces comprise a backing disc slidably inserted into a suitable housing in the casing, and in continuous contact with the outer ring of a thrust bearing which is inserted into the same housing and is mounted on the upstream end of the said intermediate shaft; to the rear of said backing disc there being provided a threaded adjustment pin which emerges from the casing in order to receive a nut-locking nut unit.

10. A unit as claimed in claim 1, characterised in that a protection cap is mounted on the reciprocating lever immediately downstream of said hemispherical head in order to completely cover the downstream end of the oil bath casing.

11. A unit as claimed in claim 1, characterised by being completely covered upperly by a protection housing which is retained at its front end by the threaded pin screwed on to the reciprocating lever, and is pivoted in its central zone to the upper end of the pin provided for hinging the spider, said upper end slightly emerging from the oil bath casing.

Fig.5.

Fig.1.

1/3

0035805

Fig.2.

**Fig. 3.**

**Fig. 4.**